**Europäisches Patentamt**

**European Patent Office**

**Office européen des brevets**

(19)

(11) Veröffentlichungsnummer: **0 179 983 B1**

(12) **EUROPÄISCHE PATENTSCHRIFT**

(45) Veröffentlichungstag der Patentschrift:
**05.10.88**

(21) Anmeldenummer: **85108339.4**

(22) Anmeldetag: **05.07.85**

(51) Int. Cl.⁴: **G 01 L 23/10,** G 01 L 9/08,
G 01 H 11/08

(54) **Stosswellensensor.**

(30) Priorität: **17.10.84 DE 3437976**

(43) Veröffentlichungstag der Anmeldung:
**07.05.86 Patentblatt 86/19**

(45) Bekanntmachung des Hinweises auf die Patenterteilung:
**05.10.88 Patentblatt 88/40**

(84) Benannte Vertragsstaaten:
**CH DE FR GB IT LI NL SE**

(56) Entgegenhaltungen:
**EP - A - 0 086 531**
**DE - A - 2 525 425**
**US - A - 4 048 526**

**ULTRASONICS, Band 19, Nr. 5, September 1981, Guildford, Surrey, England, P.A. LEWIN "Miniature piezo-electric polymer ultrasonic hydrophone probes", pp. 213-216**
**J. Acoust, Soc. Am., Band 75(3), März 1984, New York (US), St.W. Meeks et al. "The evaluation of PVF2 for underwater shockwave sensor application", pp. 1010-1012**
**Ultrasonics, Band 18, Mai 1980, Guildford (GB), K.C. Shotton et al. "A pvdf membrane hydrophone for operation in the range 0.5 to 15MHz", pp. 123-126**

(73) Patentinhaber: **DORNIER SYSTEM GmbH, Postfach 1360, D-7990 Friedrichshafen (DE)**

(72) Erfinder: **Heine, Gerold, Dr. rer. nat., Reismühlenweg 7, D-7772 Uhldingen-Mühlhofen (DE)**
Erfinder: **Stark, Joachim, Dipl.-Ing., Gaggstrasse 5/2, D-7990 Friedrichshafen (DE)**

(74) Vertreter: **Landsmann, Ralf, Dipl.-Ing., Kleeweg 3, D-7990 Friedrichshafen 1 (DE)**

ACTORUM AG

## Beschreibung

Die Erfindung betrifft eine Stosswellensensor zur Messung der Druckamplituden von Stosswellen in einem Ausbreitungsmedium, bevorzugt in Wasser. Ein wichtiges Anwendungsgebiet ist die Messung des Druckes im Brennpunkt von fokussierten Stosswellen.

Stosswellen unterscheiden sich durch den sehr steilen Anstieg, den hohen Druck, den steilen Abfall und das Fehlen einer Periodizität von Ultraschallwellen. Das Frequenzspektrum ist also wesentlich breiter als bei Ultraschall.

Bekannt sind Hydrophone für Ultraschall, die Folien aus einem piezoelektrischen Polymer, bevorzugt Polyvinylidenfluorid ($PVF_2$ oder PVDF) enthalten.

Das bei K.C. Shotton et al. in Ultrasonics 1980 auf Seiten 123–126 beschriebene Hydrophon weist eine hohe Empfindlichkeit auf, ist für Stosswellen aber ungeeignet, da die aufgedampften Kontaktierungen nach kurzer Dauer durch kavitationsbedingte Erosion abgetragen sein würden.

Bei dem von P.A. Lewin in Ultrasonics Sept. 1981 auf Seiten 213–216 beschriebenen Hydrophon würden Stosswellen die Kontaktstellen des direkt am starren Gehäuse abgebrachten Sensorelements aufbrechen.

Die Ultraschall-Hydrophone des Standes des Technik sind also nicht robust genug für einen Einsatz in Stosswellenfeldern.

Für die Messung eines Stosswellenfeldes ist ein Sensor bekannt (S.W. Meeks et al., Journal of the Acoustical Society of America 1984 Seiten 1010–1012), bei dem eine dicke $PVF_2$-Folie (500 µm) verwendet wird, die in einem dreibeinigen Rahmen mit mehreren Scheiben aufgehängt ist. Die Dicke der Folie verringert die Bandbreite des Sensors erheblich und macht ihn empfindlich für Querschwingungen.

Aufgabe der Erfindung ist es, einen Stosswellensensor zu schaffen, der neben einer ausreichenden Empfindlichkeit eine grosse Bandbreite hat und auch schnelle Anstiege ($\sim 10$ nsec) ohne Verzerrungen und Eigenschwingungen registriert und dabei durch seine hohe Druckbeständigkeit eine lange Lebensdauer aufweist.

Diese Aufgabe wird erfindungsgemäss von einem Sensor mit den Merkmalen des Anspruchs 1 gelöst.

Ausführungen der Erfindung sind Gegenstände von Unteransprüchen.

Der erfindungsgemässe Sensor hat eine hohe Bandbreite ($\gtrsim 20$ MHz), keine deutlichen Eigenresonanzen (über 100 kHz) und eine Funktionsbeständigkeit von mehr als $10^4$ Stosswellen mit einem Spitzendruck von etwa 0,1 GPa.

Wesentlich sind eine geringe Dicke der Folie (5–50 µm) und besondere Kontaktierungen, entweder ausserhalb des Stosswellenbereiches, was sich für fokussierte Stosswellen anbietet und durch eine grossflächige, in einem Rahmen eingespannte Folie mit einem kleinen sensitiven Bereich im Innern realisieren lässt, oder durch eine kleine Folie mit speziell weich aufgehängten Kontaktstellen, wobei die Elektroden nicht das starre Gehäuse berühren. In diesem Fall ist die Folie auf einen dämpfenden Träger (Backing) aus dem gleichen oder aus einem dämpfenden Material aufgeklebt und somit gegen den metallischen Schaft gedämpft. Die Spannungsableitung von den Elektroden erfolgt über dünne Drähte, die durch das dämpfende Material (Backing) an den Schaft (Aussenleiter) und an den Innenleiter führen. Die Elektroden auf der Folie berühren den starren Metallschaft nirgends. Die Löt- oder Klebstellen erfahren beim Stosswellendurchgang somit eine stark reduzierte machanische Belastung.

Durch die Kontaktierungen (Spannungsableitungen, Kontaktstellen) sind dünne Folien mit ihren Vorteilen einer hohen Resonanzfrequenz für Dickenschwingungen und einer sehr hohen Festigkeit gegenüber Biege- und Scherbenanspruchungen verwendbar. Die Sensoren haben einen geringen Impedanzunterschied zum Arbeitsmedium.

Zur Vermeidung von Kavitationsschäden ist die Sensorfolie von einer dünnen Isolierschicht (Aluminiumoxid, Siliziumoxid, bevorzugt in der Dicke von 10 µm) geschützt. Die dünne freischwebende Folie kann an einer oder an beiden Seiten durch eine solche Schicht geschützt sein, bei der hinterlegten Folie ist der Schutz nur auf der Vorderseite notwendig.

Die Erfindung wird anhand zweier Ausführungsformen näher erläutert.

Es zeigen:

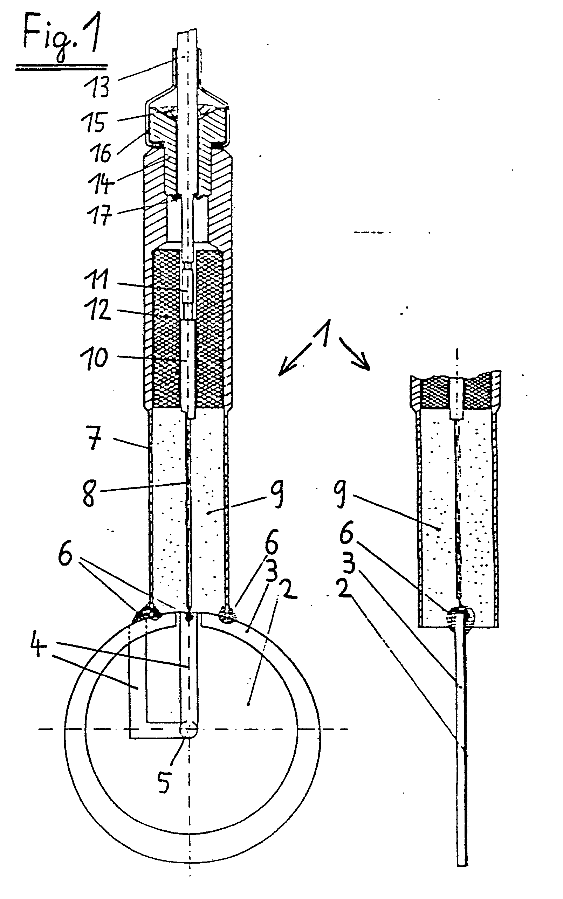

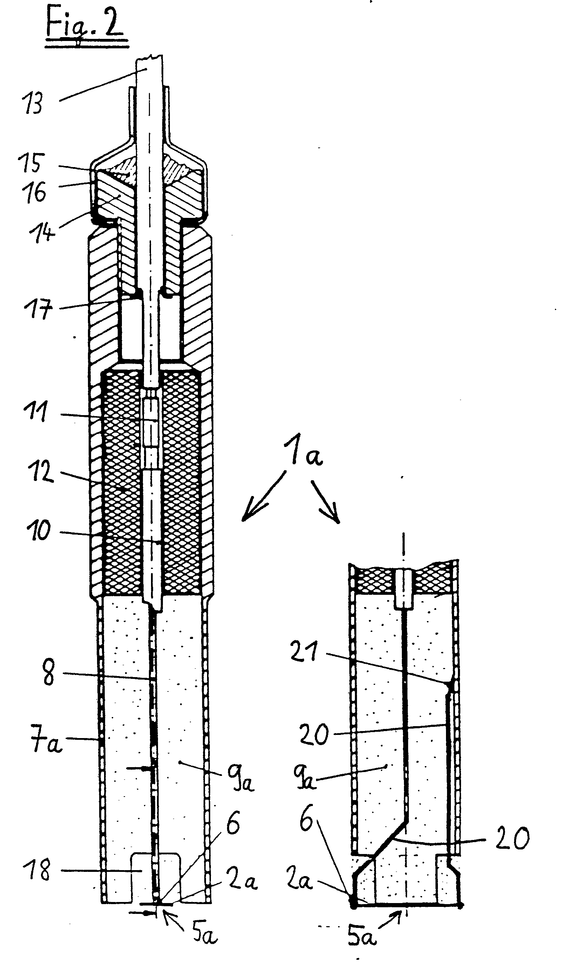

Figuren 1 und 2 Schnitte durch je einen erfindungsgemässen Stosswellensensor von vorne und von der Seite;

Figur 1 zeigt einen flächigen Aufbau des Sensors 1, bestehend aus einer PVDF-Folie 2 in einem Spannring 3. Auf der Folie sind Elektroden 4 aufgedampft oder eingeätzt gefüllt, die von der eigentlichen empfindlichen Sensorfläche 5 in der Mitte des Spannrings 3 zu dem Metallschaft 7 oder zum Innenleiter 8 führen. Die Kontaktstellen 6 der Elektroden mit dem Schaft 7 oder dem Innenleiter 8 sind hier durch einen Leitkleber realisiert. Zwischen Innenleiter 8 und Metallschaft 7 (Aussenleiter) ist eine Füllmasse 9 aus Kunststoff (z.B. PVDF) eingebracht.

Der weitere Aufbau des Sensors ist Stand der Technik: Buchse 10, Stecker 11, Isolierstück 12. Bekannt sind ebenso die koaxiale Zuleitung 13 mit Anschlussschraube 14, der Kleber 15, der Schrumpfschlauch 16 und die Lötstelle 17.

Der Sensor der Figur 1 eignet sich besonders für fokussierte Stosswellenfelder. Der empfindliche Bereich 5 ist freischwingend aufgehängt. Die eingeätzten gefüllten oder aufgedampften Elektroden 4 sind erst weit ausserhalb des Stosswellenbrennpunkts an starren Teilen befestigt.

Figur 2 zeigt eine andere Ausführung des erfindungsgemässen Sensors 1a. Die piezoelektrische PVD-Folie 2a hat hier Rechteckform. Ihre Länge entspricht dem Durchmesser des zylindrischen Schafts 7a, ihre Breite ist kleiner als die Breite der Aussparung 18 des Schafts 7a. Die Folie 2a ist auf einen Träger 9a aus gleichem oder dämpfendem Material aufgeklebt und berührt den Schaft 7a nirgends. Die Elektroden führen von der empfindlichen Sensorfläche 5a der Folie 2a zu den Rändern und sind an den Kontaktstellen 6 mit Leitkleber über dünne Drähte 20 mit dem Innenleiter 8 und mit dem Metallschaft 7a (Lötstelle 21) verbunden. Der weitere Aufbau des Sensors entspricht dem in Figur 1 gezeigten Aufbau.

Es folgt ein Zahlenbeispiel für die Dicken der Schichten an den Stellen 5 oder 5a, wie sie eine einfallende Stosswelle durchläuft:

≈ 30 nm Elektrodenschicht 4
≈ 5–50 μm PVDF-Folie 2, 2a
≈ 30 nm zweite Elektrodenschicht 4
zusätzlich bei der in Figur 2 gezeigten Lösung:
≈ 6–20 μm Klebeschicht
mehrere mm Träger.

Die Schutzschicht gegen Kavitation hat eine Dicke von bevorzugt 10 μm.

**Patentansprüche**

1. Stosswellensensor (1, 1a) zur Messung der Druckamplituden von Stosswellen in einem Ausbreitungsmedium, bevorzugt in Wasser, mit einem koaxialen Schaft (7, 7a), einer mit Elektroden (4, 4a) beschichteten, insbesondere 5 bis 50 μm dicken, piezoelektrischen Folie (2, 2a), wie einer PVDF-Folie, und mindestens einer Isolierschicht gegen Kavitationsschäden.

2. Stosswellensensor nach Anspruch 1, dadurch gekennzeichnet, dass zur Kontaktierung Kontaktstellen (6) an einem grossen Spannring (3) angeordnet sind.

3. Stosswellensensor nach Anspruch 1, dadurch gekennzeichnet, dass die Folie (2a) auf einem starken Träger (9a) aus dem gleichen oder aus dämpfendem Material aufgebracht ist und dass zur Kontaktierung dünne Drähte (20) vorgesehen sind.

4. Stosswellensensor nach einem der vorhergehenden Ansprüche, dadurch gekennzeichnet, dass zur Kontaktierung Leitkleber oder Lötungen vorgesehen sind.

5. Stosswellensensor nach Anspruch 3, dadurch gekennzeichnet, dass im Schaft (7a) Aussparungen (18) vorgesehen sind um die Folie (2a) von dem Schaft (7a) fernzuhalten.

6. Stosswellensensor nach einem der vorhergehenden Ansprüche, dadurch gekennzeichnet, dass der Träger (9, 9a) aus PVDF besteht.

7. Stosswellensensor nach Anspruch2, dadurch gekennzeichnet, dass die Folie auf einem Ring befestigt ist.

**Revendications**

1. Capteur d'ondes de choc (1, 1a) pour la mesure d'amplitudes de pression des ondes de choc dans un milieu de propagation, de préférence dans l'eau, avec une tige coaxiale (7, 7a), une feuille piézoélectrique (2, 2a), par exemple une feuille de PVDF, revêtue d'électrodes (4, 4a) et présentant notamment une épaisseur de 5 à 50 μm, et au moins une couche isolante assurant une protection contre la cavitation.

2. Capteur d'ondes de choc selon la revendication 1, caractérisé en ce que , pour l'établissement des contacts, des points de contact (6) sont disposés sur un grand collier tendeur (3).

3. Capteur d'ondes de choc selon la revendication 1, caractérisé en ce que la feuille (2a) est montée sur un support (9a) épais réalisé dans le même matériau ou dans un matériau ou dans un matériau amortisseur et que de minces fils (20) sont prévus pour l'établissement des contacts.

4. Capteur d'ondes de choc selon l'une quelconque des revendications 1 à 3, caractérisé en ce que des colles conductrices ou des soudures sont prévues pour l'établissement des contacts.

5. Capteur d'ondes de choc selon la revendication 3, caractérisé en ce que des évidements (18) sont prévus dans la tige (7a) pour écarter la feuille (2a) de la tige (7a).

6. Capteur d'ondes de choc selon l'une quelconque des revendications 1 à 5, caractérisé en ce que le support (9, 9a) est réalisé en PVDF.

7. Capteur d'ondes de choc selon la revendication 2, caractérisé en ce que la feuille est fixée sur une bague.

**Claims**

1. Shock wave sensor (1, 1a) for measuring the pressure amplitudes of shock waves in a propagation medium, preferably in water with a coaxial shank (7, 7a) of a piezoelectric foil (2, 2a), particularly of 5 to 50 μm in thickness, such as a PVDF foil which is coated with electrodes (4, 4a) and at least one insulating layer against cavitation damage.

2. Shock wave sensor according to claim 1, characterised in that for contacting, contact positions (6) are arranged on a large tension ring (3).

3. Shock wave sensor according to claim 1, characterised in that the foil (2a) is mounted on a strong carrier (9a) made of the same or of damping material and in that thin wires (20) are provided for contacting.

4. Shock wave sensor according to one of the preceding claims, characterised in that conducting sticker points or solder points are provided for contacting.

5. Shock wave sensor according to claim 3, characterised in that recesses (18) are provided in the shank (7a) so as to keep the foil (2a) away from the shank (7a).

6. Shock wave sensor according to one of the preceding claims, characterised in that the carrier (9, 9a) consists of PVDF.

7. Shock wave sensor according to claim 2, characterised in that the foil is secured on a ring.

Fig.1

Fig. 2